# FASCICULE DE BREVET EUROPEEN

(11) **EP 3 041 111 B1**
(45) Date de publication et mention de la délivrance du brevet: **20.12.2017**
(21) Numéro de dépôt: 16156019.8
(22) Date de dépôt: 07.06.2013
(51) Int. Cl.: H02J 9/08, H02J 3/38

(54) **DISPOSITIF DE RÉGLAGE DE PLATEFORME MOBILE DE PRODUCTION D'ÉLECTRICITÉ, ET DISPOSITIF DE RÉGULATION DE PLATEFORME MOBILE DE PRODUCTION D'ÉLECTRICITÉ ÉQUIPÉ D'UN TEL DISPOSITIF DE RÉGLAGE**
EINSTELLVORRICHTUNG FÜR MOBILE PLATTFORM ZUR ENERGIEERZEUGUNG, UND STEUERGERÄT EINER MOBILEN PLATTFORM ZUR ENERGIEERZEUGUNG, DIE MIT EINER SOLCHEN EINSTELLVORRICHTUNG AUSGESTATTET IST
DEVICE FOR ADJUSTING A MOBILE PLATFORM FOR PRODUCING ELECTRICITY, AND DEVICE FOR CONTROLLING A MOBILE PLATFORM FOR PRODUCING ELECTRICITY PROVIDED WITH SUCH AN ADJUSTMENT DEVICE

(30) Priorité: 08.06.2012 FR 1201653
(43) Date de publication de la demande: 06.07.2016
(62) Demande divisionnaire de: 13733371.2
(73) Titulaire: Vanbaleghem, Marc, 59310 Beuvry-la-Forêt (FR)
(72) Inventeur: Vanbaleghem, Marc, 59310 Beuvry-la-Forêt (FR)
(74) Mandataire: Cabinet Rifflart Vandenbossche

(56) Documents cités:
- EP-A1- 0 127 742
- WO-A1-2009/143834
- GB-A- 1 342 827
- US-A1- 2002 190 576

## Description

La présente invention concerne une plateforme mobile de production d'électricité configurée pour être utilisée en mode de secours ou d'extrême pointe, c'est-à-dire lors d'une rupture de l'alimentation électrique du réseau normal d'alimentation en électricité ou lors de pics de consommation d'électricité. Une telle plateforme mobile de production d'électricité peut également être utilisée en complément de production sur des points d'injection déjà existants, comme par exemple en complément d'une installation éolienne, voire tout simplement pour la production ou l'effacement du réseau, en raison de la conjoncture. L'invention porte en particulier sur un dispositif de réglage pour plateforme mobile de production d'électricité, et sur un dispositif de régulation pour plateforme mobile de production d'électricité équipé d'un tel dispositif de réglage.

Les perturbations climatiques sont de plus en plus fréquentes de nos jours. Ainsi, ponctuellement et soudainement, voire sur des périodes plus ou moins longues, des phénomènes météorologiques se produisent tels que des baisses importantes de températures, des chutes importantes de neige, des tempêtes, des chutes importantes de pluie et parfois des mini-tornades. Ces phénomènes ont généralement des conséquences importantes puisqu'ils sont très souvent la cause de ruptures de câbles électriques ou, de pics de consommation électrique entraînant un décrochement du réseau électrique, c'est-à-dire une incapacité du fournisseur d'électricité à fournir une puissance correspondant à la charge. En effet, dans ces moments-là, le réseau de transport d'énergie électrique atteint ses limites, ce qui génère des dysfonctionnements de tenue en tension et de congestion des lignes. Cela perturbe donc le fonctionnement normal des foyers et des entreprises de la zone sinistrée.

Il est connu des installations électriques de secours qui comprennent un ou plusieurs groupes électrogènes couplés entre eux. Ces groupes électrogènes sont activés et commandés au moyen de modules de gestion et de contrôle lors d'une rupture de réseau électrique normal. De telles installations sont par exemple mises en oeuvre dans les hôpitaux ou dans tout autre bâtiment nécessitant une alimentation électrique en permanence. Ces installations électriques sont dédiées à une utilisation de secours spécifique.

Il est connu également le document CN101257222 qui divulgue une installation électrique mobile de secours permettant sa mise en place rapidement et localement lors d'un accident, d'une catastrophe ou d'un sinistre provoquant une coupure de courant. Cette installation comprend un à six véhicules automobiles équipés de groupes électrogènes, un à deux véhicules automobiles équipés de transformateurs et un véhicule automobile équipé d'un système de commande qui contrôle notamment les groupes électrogènes. Les groupes électrogènes sont assemblés en parallèle au moyen d'un câble de raccordement aux transformateurs. L'installation est en outre raccordée au réseau électrique local objet de la coupure de courant.

Une telle installation selon le document CN10125722, bien souvent, ne permet pas son acheminement dans des zones difficilement accessibles par la route, du fait notamment de l'encombrement des groupes électrogènes, voire aussi de l'encombrement des transformateurs, qui nécessite d'utiliser des véhicules automobiles de grande capacité.

Il est connu également la demande internationale de brevet WO2009/143834A1 qui décrit une installation mobile de production d'électricité comprenant au moins deux groupes électrogènes de secours, au moins un réservoir de carburant permettant d'alimenter en carburant les groupes électrogènes et, au moins un centre de télécommunication qui permet de gérer la quantité de carburant dans le ou les réservoirs en vue de leur approvisionnement et, le déclenchement des groupes électrogènes en fonction de ladite quantité de carburant. Une telle conception présente des inconvénients semblables à ceux de l'installation décrite dans la demande de brevet CN10125722. En effet, l'encombrement et le poids des groupes électrogènes et du ou des réservoirs de carburant rendent difficile l'acheminement par la route de l'installation, dans des zones sinistrées. L'acheminement de cette installation peut être réalisé par voie aérienne, dans quel cas l'encombrement et le poids de l'installation occasionnent des frais de transport élevés.

On connait également le brevet GB1342827 qui décrit un dispositif de production d'électricité comprenant un alternateur dont l'arbre du rotor engrène avec un arbre de sortie d'un mécanisme de transmission. Ce mécanisme de transmission comprend également un arbre d'entrée qui peut être accouplé à une prise de force d'un tracteur. Un tel dispositif reste présent en permanence sur le site pour pallier une coupure électrique ponctuelle sur ledit site et alimenter un appareil électrique spécifique, voire une zone spécifique. La puissance électrique pouvant être fournie par un tel dispositif est réduite et ne permet pas d'alimenter complètement un site ou une zone sinistrée. En outre, la puissance électrique maximale qui peut être fournie par l'alternateur se limite à la puissance mécanique du tracteur qui entraîne cet alternateur.

L'invention a pour but principal de pallier les déficiences d'alimentation électrique lors de rupture de câbles électriques et/ou lors de pics de consommation d'énergie pouvant se produire notamment lors de perturbations météorologiques, par exemple en période de grand froid. L'invention a également pour but de pallier les inconvénients des installations connues actuellement en fournissant de l'électricité de qualité en fréquence et en tension, en particulier lors des impacts de charge.

Tout d'abord, l'invention concerne un dispositif de réglage de plateforme mobile de production d'électricité, ledit dispositif de réglage comprenant des moyens configurés pour agir sur un moteur d'un véhicule comprenant une prise de force connectée à un rotor d'alternateur, en sorte de réguler la vitesse de rotation du moteur et ainsi la fréquence de rotation de la prise de force.

Dans un premier mode de réalisation du dispositif de réglage, lesdits moyens comprennent un potentiomètre et un système de type servomoteur qui agit sur la variation du potentiomètre en fonction d'une valeur de consigne. Le potentiomètre est configuré pour être raccordé électriquement à un calculateur du véhicule permettant de commander la vitesse de rotation du moteur dudit véhicule.

Dans un second mode de réalisation du dispositif de réglage, lesdits moyens sont constitués d'un système d'actionnement configuré pour activer mécaniquement une pédale ou manette du véhicule configurée pour modifier la vitesse de rotation du moteur.

Dans une réalisation, le système d'actionnement comprend un pilier support, un vérin de commande monté en liaison pivot à son extrémité arrière sur le pilier support, le vérin de commande comprenant un piston dont l'extrémité est montée en liaison pivot sur un levier de pilotage, le levier de pilotage ayant une première extrémité montée en liaison pivot à l'extrémité inférieure dudit pilier support et une seconde extrémité en contact avec la pédale ou manette du véhicule de sorte à activer ladite pédale ou manette.

Dans une réalisation du système d'actionnement, le pilier support comprend à son extrémité inférieure une ventouse magnétique permettant l'assemblage temporaire du système d'actionnement sur un planché du véhicule.

L'invention concerne également un dispositif de régulation d'une plateforme mobile de production d'électricité, permettant de réguler la vitesse de rotation d'une prise de force d'un véhicule raccordée à un rotor d'alternateur de puissance par le biais de moyens de connexion amovible. Le dispositif de régulation comprend des moyens de mesure de la fréquence et de la tension en sortie de l'alternateur, et des moyens d'asservissement comprenant un dispositif de réglage selon l'invention, lesdits moyens d'asservissement permettant d'agir sur ledit dispositif de réglage de sorte à ajuster la vitesse de rotation de la prise de force et, ainsi, la fréquence de rotation de cette prise de force.

Dans une variante du dispositif de régulation où le dispositif de réglage est mis en oeuvre selon le premier mode de réalisation précité, les moyens d'asservissement calculent une valeur de consigne qui est transmise au système de type servomoteur, lequel agit sur la variation du potentiomètre en fonction de ladite valeur de consigne.

Dans une autre variante du dispositif de régulation où le dispositif de réglage est mis en oeuvre selon le second mode de réalisation précité, les moyens d'asservissement calculent une valeur de consigne qui est transmise au système d'actionnement, lequel agit mécaniquement sur la pédale ou manette du véhicule de sorte à ajuster la vitesse de rotation de la prise de force. Dans le cas où le système d'actionnement comprend un vérin de commande tel que précité, les moyens d'asservissement agissent sur ce vérin de commande.

L'invention est mise en oeuvre sur une plateforme mobile de production d'électricité comprenant au moins deux alternateurs de puissance comprenant chacun un axe de liaison avec le rotor de l'alternateur, agencé de sorte que la rotation de l'axe de liaison entraîne celle du rotor et génère de l'électricité. Cet axe de liaison est généralement constituer directement par l'arbre du rotor, comme cela est connu de l'homme du métier. La plateforme mobile de production d'électricité comprend également un système de gestion des alternateurs configuré pour contrôler le fonctionnement et le couplage entre les alternateurs de puissance. La plateforme mobile de production d'électricité comprend aussi des moyens de raccordement électrique configurés pour permettre, d'une part, le raccordement électrique entre tous les alternateurs de puissance et le système de gestion des alternateurs et, d'autre part, le transfert de puissance à un réseau.

En outre, la plateforme mobile de production d'électricité comprend des moyens de connexion amovible configurés pour connecter les axes de liaison des rotors, respectivement, à des prises de forces de véhicules, ces moyens de connexion amovible étant configurés pour transmettre les mouvements de rotation des prises de force des véhicules aux axes de liaison des alternateurs de puissance.

On comprend qu'une telle plateforme mobile de production d'électricité supprime l'utilisation de groupes électrogènes et par conséquent leur encombrement, en les remplaçant par des alternateurs qui sont entraînés en rotation, grâce à des moyens de connexion amovible qui sont assemblés directement sur des prises de force de véhicules disponibles ou acheminés sur le lieux du sinistres nécessitant la mise en oeuvre d'une alimentation électrique de secours ou d'extrême pointe. Cette réduction d'encombrement, et aussi la réduction de poids, facilitent fortement l'acheminement de la plateforme mobile sur le lieu du sinistre ou de la zone à alimenter électriquement, difficilement accessible. Cet acheminement pourra se faire par voies terrestres au moyen de camions, de tracteurs ou de petits véhicules quatre roues motrices, par voies maritimes au moyen de petits bateaux ou de navires et, par voies aériennes au moyen d'avions ou d'hélicoptères, ou au moyen de tous autres véhicules adaptés à ces diverses voies. En outre, la plateforme mobile est simplifiée, ce qui réduit le coût de mise en oeuvre de l'alimentation électrique de secours ou d'extrême pointe.

La plateforme mobile de production d'électricité comprend également un dispositif de régulation des vitesses de rotation des prises de force des véhicules qui est configuré pour agir sur les véhicules et réguler la fréquence en sortie des alternateurs de puissance. Cette disposition permet la mise en place d'une répartition optimisée de charge entre les véhicules. Le dispositif de régulation comprend des moyens de mesure de la fréquence et de la tension en sortie de chaque alternateur de puissance. Ce dispositif comprend également des moyens d'asservissement permettant d'ajuster la vitesse de rotation des prises de force des véhicules et la tension, en fonction des fréquences mesurées en sortie des alternateurs et de la tension en sortie des alternateurs et du réseau. Les moyens d'asservissement comprennent, pour chaque véhicule dont la prise de force est connectée à un alternateur respectif, un dispositif de réglage présentant les caractéristiques précitées selon l'invention, lesdits moyens d'asservissement étant configurés pour activer le dispositif de réglage en fonction de la fréquence mesurée en sortie de l'alternateur, de sorte à modifier la vitesse de rotation de la prise de force du véhicule.

Dans un mode de conception de la plateforme mobile de production d'électricité, le système de gestion des alternateurs comprend autant de modules de gestion d'alternateur que d'alternateurs de puissance, chaque module de gestion d'alternateur étant raccordé à un alternateur de puissance et configuré pour contrôler le fonctionnement de cet alternateur de puissance et assurer le couplage entre les alternateurs de puissance. D'autres variantes de conception du système de gestion des alternateurs sont envisageables. En particulier, le système de gestion peut comprendre un module de gestion d'alternateur centralisé configuré pour synchroniser et coupler tous les alternateurs.

Dans un mode de conception, la plateforme mobile de production d'électricité comprend une centrale de gestion configurée pour gérer le couplage à un réseau et la puissance exportée sur le réseau. De préférence, cette centrale de gestion est également configurée pour gérer de manière centralisée au moins le couplage et la répartition de charge entre les alternateurs de puissance.

De manière préférentielle et non limitative, la plateforme mobile de production d'électricité comprend jusqu'à vingt alternateurs. Un nombre plus important pourrait toutefois être envisagé.

Dans un mode préférentiel et non limitatif de conception de la plateforme mobile de production d'électricité, les moyens de raccordement comprennent un câble de raccordement par phase d'alternateur, en l'occurrence trois phases, reliant les alternateurs de puissance à un réseau à alimenter électriquement. Les moyens de raccordement comprennent également un câble agrégateur de connexion entre les modules de gestion d'alternateur. Ce câble agrégateur peut également permettre la connexion entre le système de gestion des alternateurs et la centrale de gestion. Ces moyens de raccordement pourront comprendre également d'autres câbles, notamment un câble pour le neutre et un câble pour la mise à la terre de l'installation. On peut en outre utiliser des câbles mono-conducteurs ou, au contraire, des câbles multiconducteurs.

Dans un premier mode de conception de la plateforme mobile de production d'électricité, les moyens de raccordement sont configurés pour raccorder les alternateurs en étoile. Dans un second mode de conception, ces moyens de raccordement sont configurés pour raccorder les alternateurs en grappe. Et dans un troisième mode de conception, ces moyens de raccordement sont configurés pour raccorder les alternateurs en guirlande. Ces différents modes de conception présentent pour avantage de pouvoir adapter facilement la plateforme mobile de production d'électricité en fonction de la configuration, de la géographie et des contraintes du site sur lequel ladite plateforme doit être installée. Ces différents modes de conception précités des moyens de raccordement sont envisageables lorsque le système de gestion des alternateurs comprend autant de modules de gestion d'alternateur que d'alternateur. Lorsque le système de gestion d'alternateur comprend un module de gestion d'alternateur centralisé, les moyens de raccordement seront configurés pour raccorder en étoile les alternateurs de puissance.

Dans un mode de conception de la plateforme mobile de production d'électricité, les moyens de connexion amovible sont constitués d'une transmission par cardans, ladite transmission par cardans étant configurée pour être assemblée avec la prise de force d'un camion ou d'un tracteur. Cela présente pour avantage, par exemple, d'installer ladite plateforme dans un champ ou en bordure de celui-ci, en fonction de la difficulté d'accès à la zone sinistrée coupée en électricité qu'il convient d'alimenter.

Dans une variante de conception, ces moyens de connexion amovible sont constitués d'un mécanisme de transmission par cardan configuré pour être raccordé directement ou indirectement à un essieu moteur d'un véhicule du type camion, voiture ou tracteur, par exemple.

Dans une variante de conception de la plateforme mobile de production d'électricité, les moyens de connexion amovible sont constitués d'une transmission par cardans, ladite transmission par cardans étant configurée pour être assemblée avec une prise de force constituée par l'axe de rotation d'une hélice de bateau ou de navire. Cela présente pour avantage d'installer ladite plateforme en bordure de mer ou d'une zone nautique, par exemple. Dans ce cas, les bateaux peuvent également servir à l'acheminement de la plateforme mobile de production d'électricité.

Dans un mode préférentiel et non limitatif de conception de la plateforme mobile de production d'électricité, les alternateurs développent une puissance inférieure à 180 kVA et une tension de 400 V. Cela vise à limiter l'encombrement de ladite plateforme mobile de production d'électricité. De préférence, cette puissance des alternateurs sera comprise entre 90 kVA et 180 kVA.

Dans un mode préférentiel et non limitatif de conception de la plateforme mobile de production d'électricité, les moyens de raccordement sont configurés pour être connectés au primaire d'un transformateur à haute tension agencé au niveau de la centrale de gestion. Cela présente pour avantage de coupler ladite plateforme à un réseau électrique de distribution haute tension, par exemple pour alimenter une grosse installation industrielle ou un fournisseur en électricité.

Les caractéristiques et avantages de la présente invention apparaîtront à la lecture de la description suivante de différents modes de conception d'une plateforme mobile de production d'électricité, laquelle s'appuie sur des figures, parmi lesquelles :
- La figure 1 illustre une vue d'ensemble d'une plateforme mobile de production d'électricité couplée à un réseau de distribution électrique ;
- La figure 2 schématise un premier mode de conception d'un système de gestion des alternateurs ;
- Les figures 3A, 3B et 3C illustrent trois modes de raccordement des alternateurs de la plateforme mobile de production d'électricité ;
- La figure 4 illustre un second mode de conception d'un système de gestion des alternateurs ;
- La figure 5 schématise une implantation d'un dispositif de régulation sur une plateforme mobile de production d'électricité ;
- La figure 6 illustre un système d'actionnement d'une pédale de véhicule.

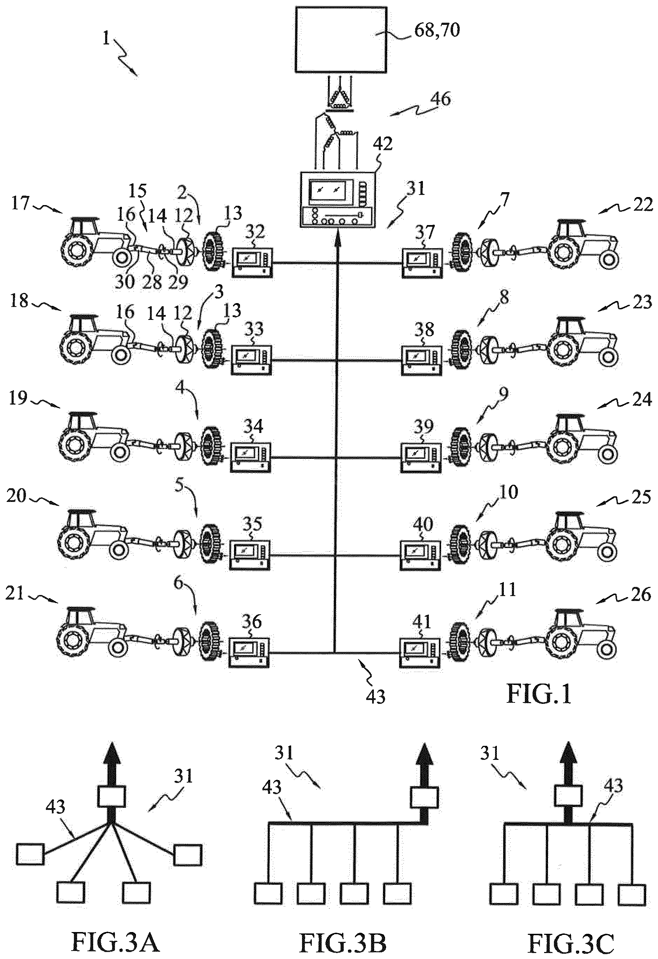

La plateforme mobile de production d'électricité 1 comprend des alternateurs de puissance. Sur la figure 1 sont illustrés dix alternateurs 2 - 11. Leur nombre peut toutefois être supérieur voire inférieur, selon les besoins en fourniture d'électricité. De préférence, on pourra prévoir de deux à vingt alternateurs de puissance, sans pour autant que cela soit limitatif. Ces alternateurs développent une puissance réduite, de préférence comprise entre 90 kVA et 180 kVA et, développent une tension de 400 V. L'utilisation de tels alternateurs disposant d'une puissance réduite permet de limiter leur taille et donc l'encombrement de la plateforme mobile de production d'électricité 1. Cela permet également de véhiculer facilement et rapidement ces alternateurs 2 - 11. Bien entendu, une puissance supérieure est envisageable sans sortir du cadre de l'invention.

Comme on le constate sur la figure 1, et tel que cela est bien connu de l'homme du métier, chacun des alternateurs 2 - 11 comprend un rotor 12 et un stator 13. La rotation du rotor 12 permet de générer de l'électricité. En outre, un axe de liaison 14 est agencé sur le rotor 12. La rotation de l'axe de liaison 14 entraîne la rotation du rotor 12.

Comme on le constate sur la figure 1, la plateforme mobile de production d'électricité 1 comprend des moyens de connexion amovible 15 qui sont agencés sur chaque alternateur 2 - 11. Ces moyens de connexion amovible 15 sont configurés pour connecter de manière temporaire l'axe de liaison 14 d'un alternateur 2 - 11 à une prise de force 16 d'un véhicule 17 - 26. La rotation de la prise de force 16 entraîne la rotation de l'axe de liaison 14 et donc celle du rotor 12, ce qui permet à l'alternateur de puissance de générer de l'électricité. Bien entendu ces moyens de connexion amovible 15 permettent de déconnecter rapidement les alternateurs 17 - 26, des prises de force 16 des véhicules 17 - 26.

Sur la figure 1, dix véhicules 17 - 26 sont connectés respectivement aux dix alternateurs 2 - 11. En outre ces dix véhicules 17 - 26 sont des tracteurs. On pourrait toutefois prévoir d'autres véhicules comprenant une prise de force, comme par exemple des camions ou tous autres véhicules capables de se déplacer sur terre, tels que des engins militaires. On peut également utiliser comme prise de force 16, l'axe de rotation d'une hélice de moteur d'un bateau ou d'un navire, ce qui pourra être privilégié lorsque la plateforme mobile de production d'électricité 1 sera installée en bordure de mer, d'un lac ou de tous autres plans nautiques pouvant être difficilement accessibles par la route. Dans des variantes, selon la configuration de la zone sinistrée à alimenter électriquement, il sera possible de prévoir une association de véhicules 17 - 26 de différents types pour l'entraînement des alternateurs 2 - 11.

Comme illustré sur la figure 1, les moyens de connexion amovible 15 sont constitués d'un arbre de transmission 28 équipé de cardans. Un premier cardan 29 est assemblé à l'axe de liaison 14 du rotor 12 et un second cardan 30 est assemblé à la prise de force 16 du véhicule 17 - 26. Cela présente pour avantage de pouvoir transmettre facilement la rotation de la prise de force 16 du véhicule 17 - 26, à l'axe de liaison 14 de l'alternateur 2 - 11 malgré un désaxage entre ces éléments.

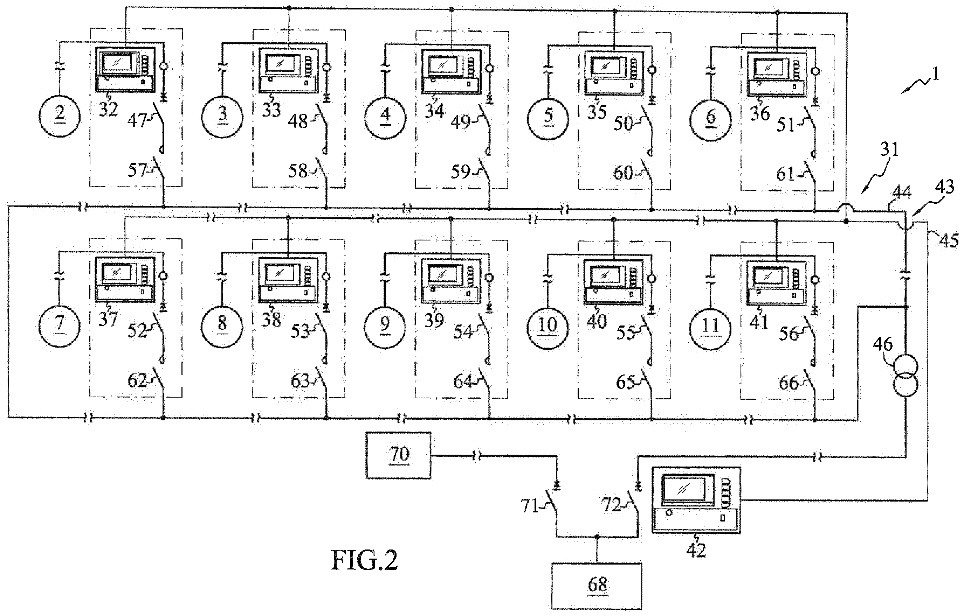

La plateforme mobile de production d'électricité 1 comprend un système agrégateur de puissance 31 tel qu'illustré sur les figures 1 et 2. Ce système agrégateur de puissance 31 comprend un système de gestion des alternateurs qui est constitué, sur les figures 1 et 2, de modules de gestion d'alternateur 32 - 41, un pour chaque alternateur 2 - 11. Ainsi, dix modules de gestion d'alternateur 32 - 41 sont représentés sur les figures 1 et 2 et sont en liaisons respectivement avec les dix alternateurs 2 - 11. Ces modules de gestion d'alternateur 32 - 41 sont configurés pour contrôler respectivement les alternateurs 2 - 11 et pour assurer leur couplage. Ce système agrégateur de puissance 31 comprend également une centrale de gestion 42 configurée pour contrôler les modules de gestion d'alternateur 32 - 41 et pour gérer de manière centralisée le couplage et la répartition de charge entre les alternateurs 2 - 11. Cette centrale de gestion 42 est également configurée pour gérer le couplage à un réseau de la zone à alimenter électriquement et, pour gérer la puissance exportée sur le réseau.

Ce système agrégateur 31 comprend également des moyens de raccordement 43 entre les alternateurs 2 - 11 et le réseau électrique de la zone à alimenter électriquement. Ces moyens de raccordement 43 sont constitués de câbles, au moins un câble 44 par phase de l'alternateur 2 - 11. Des connecteurs aux extrémités des câbles 44 permettent de raccorder ceux-ci, à une première extrémité, aux alternateurs 2 - 11 et, à une seconde extrémité, au réseau électrique de la zone à alimenter électriquement. La section et le nombre de câbles par phase seront déterminés en fonction de la longueur de ces câbles et de la puissance des alternateurs 2 - 11. Ces moyens de raccordement 43 comprennent également un câble agrégateur 45 permettant de connecter entre eux les modules de gestion d'alternateur 32 - 41 et la centrale de gestion 42. Ces moyens de raccordement 43 peuvent disposer également d'un câble pour le neutre et d'un câble pour la mise à la terre.

Ces moyens de raccordement 43 peuvent avoir différentes configurations. Sur la figure 3A, on constate que les câbles 44, 45 sont disposés en étoile. Sur la figure 3B, on constate que les câbles 44, 45 sont disposés en grappe. Et sur la figure 3C, on constate que les câbles 44, 45 sont disposés en guirlande. Cela permet d'adapter au mieux la plateforme mobile de production d'électricité 1 en fonction de la configuration et de la géographie du site où celle-ci doit être installée. Ces différentes configurations sont mises en oeuvre au moyen de boîtiers de connexion et de dérivation.

Différentes configurations sont possibles lors de l'exploitation de la plateforme mobile de production d'électricité 1. En effet, on peut prévoir que les moyens de raccordement 43 soient connectés en aval, directement sur le réseau de distribution électrique de la zone à alimenter électriquement, sans aucune transformation. On peut au contraire prévoir de raccorder ces moyens de raccordement 43 en aval, sur le primaire d'un transformateur 46 à haute tension, le secondaire du transformateur 46 délivrant, par exemple, une puissance de 1500 kVA et une tension de 20000 V.

Comme on le constate sur la figure 2, le système agrégateur 31 comprend également des disjoncteurs de protection électrique 47 - 56 disposés respectivement en aval des alternateurs 2 - 11, ainsi que des commutateurs 57 - 66 qui sont commandés par les modules de gestions d'alternateur 17 - 26.

Comme on le constate sur la figure 2, le réseau de distribution électrique 67 de la zone d'utilisation 68 est alimenté, dans des conditions normales d'utilisation, depuis le réseau d'alimentation électrique 69 du fournisseur en électricité 70. En mode secours ou lors de pic de consommation sur le réseau d'alimentation électrique 69, ce réseau de distribution électrique 67 de la zone d'utilisation 68 est alimenté depuis le réseau d'alimentation de secours, à savoir les moyens de raccordement 43 de la plateforme mobile de production d'électricité 1. Pour cela, un premier disjoncteur de protection 71 est agencé entre le réseau de distribution électrique 67 de la zone d'utilisation 68 et le réseau d'alimentation électrique 69 du fournisseur d'électricité 70. De même, un second disjoncteur de protection 72 est agencé entre le réseau de distribution électrique 67 de la zone d'utilisation 68 et les moyens de raccordement 43 de la plateforme mobile de production d'électricité 1. La centrale de gestion 42 est configurée pour gérer le basculement sur le réseau d'alimentation électrique 69 du fournisseur d'électricité 70 et sur les moyens de raccordement 43 de la plateforme mobile de production d'électricité 1.

Les modules de gestion d'alternateur 32 - 41 seront par exemple du type GENSYS® 2.0 développé par la société CRE Technology®. De même, la centrale de gestion 42 sera par exemple du type MASTER® 2.0 développé par la société CRE Technology®. Des variantes restent toutefois envisageables sans sortir du cadre de l'invention.

Ces modules de gestion d'alternateur 32 - 41 et la centrale de gestion 42 permettront de gérer la plateforme mobile de production d'électricité 1 selon diverses variantes de fonctionnement, notamment un mode de fonctionnement manuel et un mode de fonctionnement automatique. En mode de gestion automatique, les modules de gestion d'alternateur 32 - 41 et la centrale de gestion pourront être configurés pour synchroniser et coupler les alternateurs.

La plateforme mobile de production d'électricité 1 peut comprendre également des systèmes de démarrage télécommandés configurés pour mettre en marches automatiquement les véhicules avec un temps de réponse rapide des alternateurs 2 - 11, par exemple inférieur à 13 minutes.

La plateforme mobile de production d'électricité 1 peut comprendre également un système de commutation normal/secours permettant une utilisation en mode secours et, un basculement en mode îloté lorsque ladite plateforme est installée chez un client industriel qui souhaite et décide de basculer en mode îloté, pour une alimentation de ses installations. Ce client pourra en complément être alimenté depuis le réseau d'alimentation électrique 69 du fournisseur d'électricité 70. Cela permettra d'optimiser la gestion de la consommation électrique en fonction des conditions d'utilisation prédéfinies avec le fournisseur d'électricité 70.

On pourra également envisager un mode de fonctionnement consistant à réinjecter l'électricité produite par la plateforme mobile de production d'électricité 1 directement sur le réseau d'alimentation électrique 69 du fournisseur d'électricité 70.

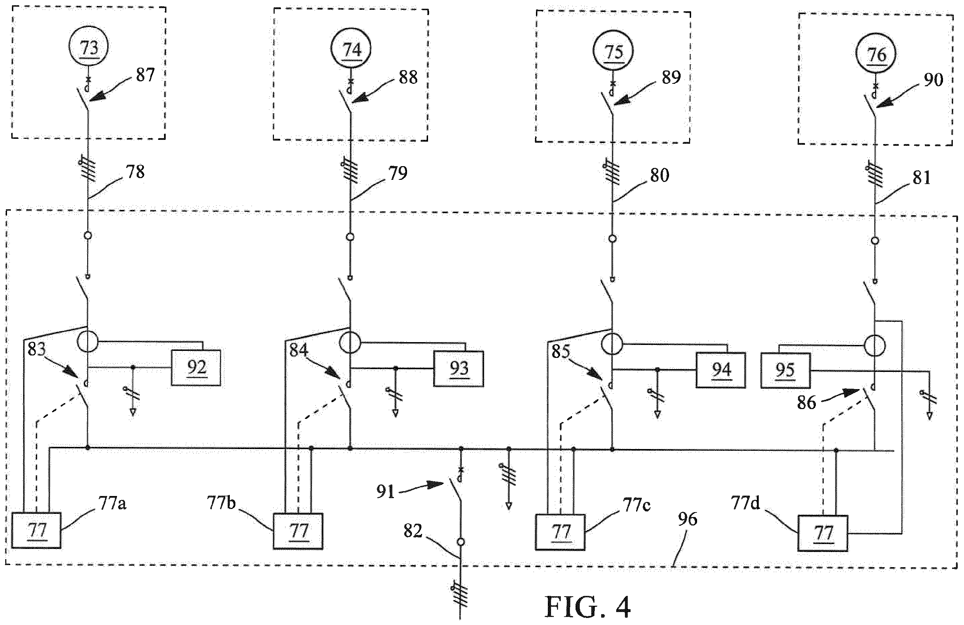

Sur la figure 4 sont représentés quatre alternateurs de puissance 73 - 76. Leur nombre peut toutefois être supérieur, par exemple on peut prévoir seize alternateurs de puissance. Ces alternateurs 73 - 76 sont entraînés en rotation par des prises de force de véhicules, de manière semblable à ce qui est décrit pour les figures 1 et 2. Ces alternateurs de puissance 73 - 76 sont raccordés en étoile sur un système de gestion qui, à la différence de celui décrit précédemment pour les figures 1 et 2, est constitué d'un seul module de gestion d'alternateur centralisé 77. Sur la figure 4, ce module de gestion centralisé 77 est illustré par quatre boîtiers 77a, 77b, 77c, 77d qui consistent, dans la réalité, en un seul et unique élément ; cette illustration a simplement pour but de simplifier la lecture du schéma. Les alternateurs 73 - 76 sont raccordés en étoile par le biais de câbles de puissance 78 - 82. Le module de gestion d'alternateur centralisé 77 assure la synchronisation et le couplage des alternateurs de puissance 73 - 76 en actionnant des contacteurs 83 - 86 tels que schématisés sur la figure 4. Le module de gestion d'alternateur centralisé 77 sera par exemple du type GENSYS® 2.0 développé par la société CRE Technology®. Bien entendu, des disjoncteurs de protection 87 - 90 sont prévus en aval des alternateurs de puissance 73 - 76 et un disjoncteur de protection 91 est prévu en amont du câble de puissance 82 pour l'alimentation d'un réseau. Sur cette figure 4 sont également illustrés des appareils de mesure 92 - 95 de divers paramètres tels que la tension, le courant, la puissance ou le rendement ... Cette conception présente pour avantage de pouvoir intégrer notamment le module de gestion centralisé 77, les contacteurs 83 - 86, le disjoncteur de protection 91 et les appareils de mesure 92 - 95 dans une armoire 96 illustrée par les traits-tillés sur la figure 4. Et ainsi, d'optimiser la compacité et la mobilité de l'installation. On pourra également prévoir une centrale de gestion afin de contrôler le basculement et le couplage de la plateforme mobile 1 sur plusieurs réseaux, de manière semblable à ce qui a été décrit précédemment pour les figures 1 et 2.

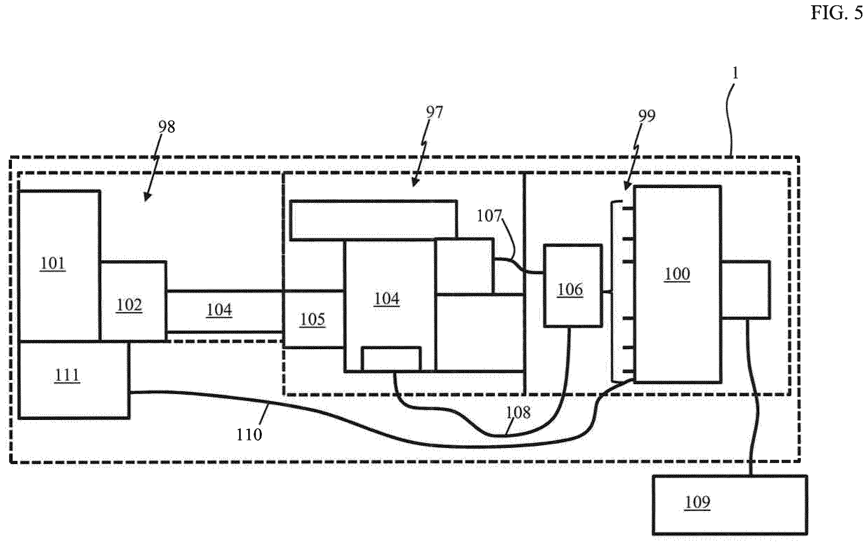

Sur la figure 5 est illustrée une variante de conception de la plateforme mobile de production d'électricité 1, sur laquelle sont schématisés un seul alternateur 97 et un seul véhicule 98 raccordé au système de gestion 99 qui comprend une armoire centralisée 100.

Bien entendu, comme précisé précédemment, la plateforme mobile de production d'électricité comprend plusieurs alternateurs 97, par exemple entre quatre et dix alternateurs 97, entrainés respectivement en rotation par des véhicules 98, tous les alternateurs étant raccordés respectivement à des modules de gestion d'alternateur 106, tels que ceux décrits en figure 2, ces module de gestion d'alternateur 106 étant disposés sur l'armoire centralisée 100. Sur la figure 5, un seul module de gestion d'alternateur 106 est schématisé.

Le véhicule 98 comprend un moteur 101 qui entraîne une prise de force 102. Cette prise de force 102 est connectée à l'arbre du rotor 103 de l'alternateur 97 au moyen d'une transmission par cardan 104 et d'un démultiplicateur de vitesse 105. Tous les alternateurs 97 raccordés aux véhicules 98 sont en mode «statisme». C'est-à-dire que lorsque le couplage au module de gestion est effectué, les puissances active et réactive sont réparties de manière égale entre les différents moteurs 101 des véhicules 98 ou proportionnellement à leur puissance nominale, dans le cas de véhicules 98 disposant de puissances différentes. Les fluctuations de charge entraînent des variations de quelques pourcents de la tension et de la vitesse des moteurs 101 des véhicules 98, ce qui a une incidence sur la fréquence et sur la tension de sortie fournie à l'utilisateur 109. Pour pallier ce phénomène, le système de gestion 99 comprend ces modules de gestion d'alternateur 106, un pour chaque alternateur 97, qui sont par exemple du type GENSYS® 2.0 et permettent, d'une part, le raccordement d'un câble de puissance 107 pour le transfert de la puissance de l'alternateur 97 vers ledit système de gestion 99 et, d'autre part, le raccordement d'un câble d'asservissement 108 permettant audit module de gestion d'alternateur 106 d'asservir la puissance réactive des alternateurs 97 et ainsi, de réguler la tension en sortie desdits alternateurs 97. Le module de gestion d'alternateur 106 est donc programmé pour effectuer un tel asservissement et pour agir sur une carte de régulation de tension agencée sur l'alternateur 97. En outre, chaque module de gestion d'alternateur 106, disposé sur l'armoire centralisée 100, est raccordé par le biais d'un second câble d'asservissement 110 à un dispositif de réglage 111 qui agit sur le moteur 101 du véhicule 98, en sorte de réguler la vitesse de rotation du moteur 101 et ainsi, de réguler la vitesse et, donc, la fréquence de rotation de la prise de force 102, ce qui permet de réguler la fréquence et la tension en sortie des alternateurs 97 et, donc, la fréquence et la tension en sortie du système de gestion 99 pour une distribution chez l'utilisateur 109. Chaque module de gestion d'alternateur 106 est donc programmé pour transmettent une consigne au dispositif de réglage 111 permettant de réaliser l'asservissement du moteur 101. Les câbles de puissance 107 et les câbles d'asservissement 108, 109 sont raccordés sur l'armoire 100 par le biais de fiches de raccordement.

Dans un mode de réalisation, non illustré en détail sur les figures, ce dispositif de réglage 111 est constitué d'un servomoteur ou d'un système équivalent, alimenté par une source électrique externe, telle qu'une batterie, et d'un potentiomètre connecté au servomoteur. Ce servomoteur permet de modifier le réglage du potentiomètre afin de changer la valeur de sa résistance. Ce servomoteur est commandé par le module de gestion d'alternateur 106. Ce potentiomètre est raccordé par un câble de connexion à un calculateur agencé sur le véhicule 98, ledit calculateur permettant de modifier la vitesse de rotation du moteur 101 en fonction du réglage de la résistance dudit potentiomètre. L'agencement d'un tel calculateur sur un véhicule est connu de l'homme de métier du domaine des véhicules.

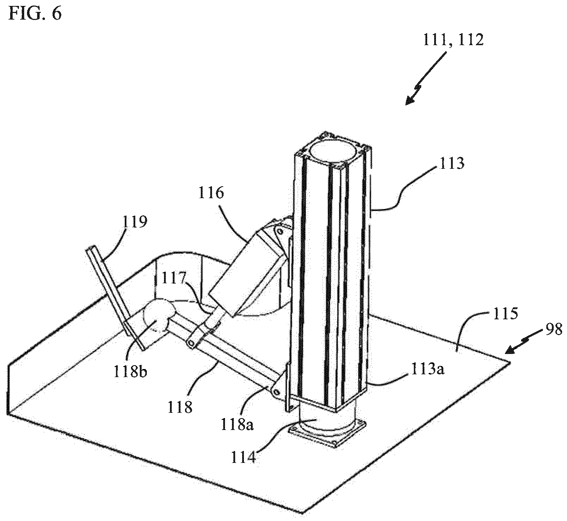

Dans une variante de réalisation, ce dispositif de réglage 111 est constitué d'un système d'actionnement 112 illustré en figure 6. Ce système d'actionnement 112 comprend un pilier support 113 comprenant à son extrémité inférieure 113a une ventouse magnétique 114 permettant l'assemblage temporaire du système d'actionnement 112 sur le planché 115 du véhicule 98. Un vérin de commande 116 est monté en liaison pivot à son extrémité arrière, sur le pilier support 113. Le piston 117 du vérin de commande 116 a son extrémité montée en liaison pivot sur un levier de pilotage 118, dont une des extrémités 118a est montée en liaison pivot à l'extrémité inférieure 113a dudit pilier support 113. La seconde extrémité 118b du levier de pilotage 118 est en contact avec une pédale 119 du véhicule 98 permettant de modifier la vitesse de rotation du moteur 101 et, donc, la vitesse de rotation de la prise de force 104. Le module de gestion d'alternateur 106 permet donc, par le biais du câble d'asservissement 110, de commander le vérin de commande 116 afin de réguler la vitesse du moteur 101.

Le véhicule 98 est de préférence un tracteur qui comporte une pédale de vitesse qui agit sur un potentiomètre agencé sur ledit tracteur et raccordé à un calculateur, ledit calculateur agissant sur la vitesse du moteur dudit tracteur. Le système d'actionnement 112 est positionné et fixé sur le plancher 115 du tracteur en sorte que l'extrémité 118b du levier de commande 118 soit en contact sur la pédale de vitesse 119 du tracteur. Lorsque le dispositif de réglage 111 comprend un servomoteur agissant sur un potentiomètre, tel que décrit précédemment, l'autre potentiomètre agencé sous la pédale du tracteur est alors déconnecté du calculateur du tracteur et, ledit potentiomètre du dispositif de réglage 111 est alors directement connecté audit calculateur.
On pourrait bien entendu envisager d'autres types de véhicules équipés d'une pédale de vitesse ou d'une manette de vitesse, comme par exemple un camion ou une voiture, voire un bateau.
Dans une variante de conception des moyens de connexion amovible entre le véhicule et l'alternateur, ceux-ci peuvent être constitués d'un mécanisme de transmission par cardan configuré pour être raccordé directement ou indirectement à un essieu moteur d'un véhicule du type camion, voiture ou tracteur, par exemple. Il peut par exemple s'agir de deux rouleaux capables de recevoir une roue du véhicule. La rotation de la roue entraîne celle des rouleaux qui engrènent et entraînent une prise de force raccordé à l'axe du rotor de l'alternateur par une transmission de type cardan. On peut également prévoir une pièce configurée pour être engagée sur les gougeons ou sur les écrous de serrage de la roue d'un véhicule et un système de levage du véhicule permettant de lever les roues motrices, pour les positionner hors de contact du sol, ladite pièce constituant une prise de force qui est raccordée à l'axe du rotor de l'alternateur par une transmission de type cardant.

## Revendications

1. Dispositif de réglage (111) de plateforme mobile (1) de production d'électricité, **caractérisé en ce qu'**il comprend des moyens configurés pour agir sur un moteur (101) d'un véhicule (98) comprenant une prise de force (102) connectée à un rotor d'alternateur (97), en sorte de réguler la vitesse de rotation du moteur (101) et ainsi la fréquence de rotation de la prise de force (102).

2. Dispositif de réglage (111) selon la revendication 1, dans lequel les moyens comprennent un potentiomètre et un système de type servomoteur qui agit sur la variation du potentiomètre en fonction d'une valeur de consigne, ledit potentiomètre étant configuré pour être raccordé électriquement à un calculateur du véhicule permettant de commander la vitesse de rotation du moteur dudit véhicule.

3. Dispositif de réglage (111) selon la revendication 1, dans lequel les moyens sont constitués d'un système d'actionnement (112) configuré pour activer mécaniquement une pédale ou manette du véhicule configurée pour modifier la vitesse de rotation du moteur.

4. Dispositif de réglage (111) selon la revendication 1, dans lequel le système d'actionnement (112) comprend un pilier support (113), un vérin de commande (116) monté en liaison pivot à son extrémité arrière sur le pilier support 113, le vérin de commande (116) comprenant un piston (117) dont l'extrémité est montée en liaison pivot sur un levier de pilotage (118), le levier de pilotage (118) ayant une première extrémité (118a) montée en liaison pivot à l'extrémité inférieure (113a) dudit pilier support (113) et une seconde extrémité (118b) en contact avec la pédale (119) ou manette du véhicule (98) de sorte à activer ladite pédale (119) ou manette.

5. Dispositif de réglage (111) selon la revendication 4, dans lequel le pilier support (113) comprend à son extrémité inférieure (113a) une ventouse magnétique (114) permettant l'assemblage temporaire du système d'actionnement (112) sur un planché (115) du véhicule (98).

6. Dispositif de régulation d'une plateforme mobile de production d'électricité (1), permettant de réguler la vitesse de rotation d'une prise de force d'un véhicule raccordée à un rotor d'alternateur de puissance par le biais de moyens de connexion amovible (15), ledit dispositif de régulation comprenant :
- des moyens de mesure de la fréquence et de la tension en sortie de l'alternateur;
- des moyens d'asservissement comprenant un dispositif de réglage (111) selon l'une des revendications 1 à 5, lesdits moyens d'asservissement permettant d'agir sur ledit dispositif de réglage (111) de sorte à ajuster la vitesse de rotation de la prise de force.

7. Dispositif de régulation selon la revendication 6 rattaché à la revendication 2, dans lequel les moyens d'asservissement calculent une valeur de consigne transmise au système de type servomoteur qui agit sur la variation du potentiomètre en fonction de ladite valeur de consigne.

8. Dispositif de régulation selon la revendication 6 rattachée à l'une des revendications 3 à 5, dans lequel les moyens d'asservissement calculent une valeur de consigne transmise au système d'actionnement qui agit mécaniquement sur la pédale ou manette du véhicule de sorte à ajuster la vitesse de rotation de la prise de force.

9. Dispositif de régulation selon la revendication 8 rattachée à l'une des revendications 4 ou 5, dans lequel les moyens d'asservissement agissent sur le vérin de commande (116).

## Patentansprüche

1. Vorrichtung zum Regulieren (111) einer beweglichen Plattform (1) zur Herstellung von Elektrizität, **dadurch gekennzeichnet, dass** sie Mittel umfasst, die konfiguriert sind, um auf einen Motor (101) eines Fahrzeugs (98) zu wirken, umfassend eine Zapfwelle (102), die mit einem Lichtmaschinenrotor (97) verbunden ist, um die Drehgeschwindigkeit des Motors (101) und somit die Drehfrequenz der Zapfwelle (102) zu regulieren.

2. Vorrichtung zum Regulieren (111) nach Anspruch 1, wobei die Mittel ein Potenziometer und ein System vom Typ Servomotor umfassen, das auf die Variation des Potenziometers in Funktion eines Vorgabewerts wirkt, wobei das Potenziometer konfiguriert ist, um elektrisch an einen Rechner des Fahrzeugs angeschlossen zu sein, der ermöglicht, die Drehgeschwindigkeit des Motors des Fahrzeugs einzustellen.

3. Vorrichtung zum Regulieren (111) nach Anspruch 1, wobei die Mittel aus einem Betätigungssystem (112) bestehen, das konfiguriert ist, um mechanisch ein Pedal oder einen Griff des Fahrzeugs zu aktivieren, das/der konfiguriert ist, um die Drehgeschwindigkeit des Motors zu modifizieren.

4. Vorrichtung zum Regulieren (111) nach Anspruch 1, wobei das Betätigungssystem (112) eine Stützsäule (113) umfasst, ein Stellglied (116), das in Schwenkverbindung an seinem hinteren Ende auf der Stützsäule 113 montiert ist, wobei das Stellglied (116) einen Kolben (117) umfasst, dessen Ende in Schwenkverbindung auf einem Steuerhebel (118) montiert ist, wobei der Steuerhebel (118) ein erstes Ende (118a) aufweist, das in Schwenkverbindung auf dem unteren Ende (113a) der Stützsäule (113) montiert ist, und ein zweites Ende (118b) in Kontakt mit dem Pedal (119) oder dem Griff des Fahrzeugs (98), um das Pedal (119) oder den Griff zu aktivieren.

5. Vorrichtung zum Regulieren (111) nach Anspruch 4, wobei die Stützsäule (113) an ihrem unteren Ende (113a) einen magnetischen Saugnapf (114) umfasst, der den vorübergehenden Zusammenbau des Betätigungssystems (112) auf einem Boden (115) des Fahrzeugs (98) ermöglicht.

6. Vorrichtung zum Regulieren einer beweglichen Plattform zum Herstellen von Elektrizität (1), die ermöglicht, die Drehgeschwindigkeit einer Zapfwelle eines Fahrzeugs zu regulieren, die an einen Leistungs-Lichtmaschinenrotor mit Hilfe von Mitteln zur lösbaren Verbindung (15) angeschlossen ist, wobei die Vorrichtung zum Regulieren Folgendes umfasst:
- Mittel zum Messen der Frequenz und der Spannung am Ausgang der Lichtmaschine;
- Mittel zur Steuerung, umfassend eine Vorrichtung zum Regulieren (111) nach einem der Ansprüche 1 bis 5, wobei die Mittel zur Steuerung ermöglichen, auf die Vorrichtung zum Regulieren (111) derart zu wirken, dass die Drehgeschwindigkeit der Zapfwelle angepasst wird.

7. Vorrichtung zum Regulieren nach Anspruch 6 in Verbindung mit Anspruch 2, wobei die Mittel zur Steuerung einen Vorgabewert berechnen, der an das System vom Typ Servomotor übertragen wird, der auf die Variation des Potenziometers in Funktion des Vorgabewerts wirkt.

8. Vorrichtung zum Regulieren nach Anspruch 6 in Verbindung mit einem der Ansprüche 3 bis 5, wobei die Mittel zur Steuerung einen Vorgabewert berechnen, der an das Betätigungssystem übertragen wird, das mechanisch auf das Pedal oder den Griff des Fahrzeugs derart wirkt, dass die Drehgeschwindigkeit der Zapfwelle angepasst wird.

9. Vorrichtung zum Regulieren nach Anspruch 8 in Verbindung mit einem der Ansprüche 4 oder 5, wobei die Mittel zur Steuerung auf das Stellglied (116) wirken.

## Claims

1. Adjustment device (111) for adjusting a mobile platform (1) for producing electricity, **characterised in that** it comprises means configured to act on an engine (101) of a vehicle (98) comprising a power take-off (102) connected to a rotor of an alternator (97), so as to control the rotational speed of the engine (101) and therefore the rotational frequency of the power take-off (102).

2. Adjustment device (111) according to claim 1, wherein the means comprise a potentiometer and a servo-motor type system that acts on the variation of the potentiometer as a function of a setpoint value, said potentiometer being configured such that it is electrically connected to a vehicle computer used to control the rotational speed of the engine of said vehicle.

3. Adjustment device (111) according to claim 1, wherein the means are constituted from an actuation system (112) configured to mechanically activate a pedal or lever of the vehicle configured to modify the rotational speed of the engine.

4. Adjustment device (111) according to claim 1, wherein the actuation system (112) comprises a support pillar (113), an actuating cylinder (116) mounted via a pivot link at the rear end thereof onto the support pillar 113, the actuating cylinder (116) comprising a piston (117), the end of which is mounted via a pivot link onto a control lever (118), the control lever (118) having a first end (118a) mounted via a pivot link to the lower end (113a) of said support pillar (113) and a second end (118b) in contact with the pedal (119) or lever of the vehicle (98) so as to activate said pedal (119) or lever.

5. Adjustment device (111) according to claim 4, wherein the support pillar (113) comprises, at the lower end (113a) thereof, a magnetic suction pad (114) allowing the temporary assembly of the actuation system (112) onto a floor (115) of the vehicle (98).

6. Control device for controlling a mobile platform for producing electricity (1), designed to control the rotational speed of a power take-off of a vehicle connected to a rotor of a power alternator via removable connection means (15), said control device comprising:
- means for measuring the output voltage and frequency of the alternator;
- servo-control means comprising an adjustment device (111) according to one of claims 1 to 5, said servo-control means being designed to act on said adjustment device (111) so as to adjust the rotational speed of the power take-off.

7. Control device according to claim 6, in combination with claim 2, wherein the servo-control means calculate a setpoint value transmitted to the servo-motor type system which acts on the variation of the potentiometer as a function of said setpoint value.

8. Control device according to claim 6, in combination with one of claims 3 to 5, wherein the servo-control means calculate a setpoint value transmitted to the actuation system which mechanically acts on the pedal or lever of the vehicle so as to adjust the rotational speed of the power take-off.

9. Control device according to claim 8, in combination with either claim 4 or claim 5, wherein the servo-control means act on the actuating cylinder (116).
